# FASCICULE DE BREVET EUROPEEN

(11) **EP 3 015 743 B1**
(45) Date de publication et mention de la délivrance du brevet: **24.05.2017**
(21) Numéro de dépôt: 15186803.1
(22) Date de dépôt: 25.09.2015
(51) Int. Cl.: F16H 57/04, B64C 27/12

(54) **DISPOSITIF DE LUBRIFICATION A FIABILITE AUGMENTEE A TRIPLE CIRCUIT D'UNE BOITE DE TRANSMISSION PRINCIPALE DE PUISSANCE D'UN AERONEF**
SCHMIERVERFAHREN UND -VORRICHTUNG MIT VERBESSERTER ZUVERLÄSSIGKEIT MIT DREIFACHKREISLAUF EINES HAUPTLEISTUNGSÜBERTRAGUNGSGETRIEBES EINES LUFTFAHRZEUGS
A TRIPLE CIRCUIT LUBRICATION DEVICE WITH INCREASED RELIABILITY FOR A MAIN POWER TRANSMISSION GEARBOX OF AN AIRCRAFT

(30) Priorité: 31.10.2014 FR 1402468
(43) Date de publication de la demande: 04.05.2016
(73) Titulaire: Airbus Helicopters, 13725 Marignane Cedex (FR)
(72) Inventeur: GOUJET, Damien, 13960 SAUSSET LES PINS (FR)
(74) Mandataire: Pouillot, Laurent Pierre Paul

(56) Documents cités:
- FR-A- 1 194 993
- FR-A1- 2 685 758
- JP-A- 2002 340 152

## Description

La présente invention se rapporte au domaine de la lubrification des boîtes de transmission, en particulier des boîtes de transmission destinées à un aéronef à voilure tournante.

La présente invention concerne un dispositif de lubrification à fiabilité augmentée à triple circuit d'un système mécanique. Ce dispositif de lubrification est particulièrement adapté à la lubrification d'une boîte de transmission principale de puissance d'un aéronef à voilure tournante.

Un système mécanique comporte généralement des éléments tournants, tels que des arbres et des roulements, ainsi que des éléments de transmission de puissance et de réduction ou d'augmentation de vitesse, tels que des pignons et/ou des engrenages. Il est alors essentiel pour le bon fonctionnement du système mécanique de lubrifier et de refroidir ces éléments par exemple par de l'huile sous pression. Cette lubrification est en général assurée par un circuit de lubrification et a pour fonctions principales de limiter l'usure et l'échauffement de ces éléments du système mécanique et, par suite, de prolonger la durée de vie du système mécanique. Sans une telle lubrification, le fonctionnement du système mécanique peut être rapidement dégradé, voire impossible.

Suite à cette lubrification du système mécanique, l'huile circulant dans le circuit de lubrification peut être parfois très chaude et alors être refroidie dans un circuit de refroidissement généralement extérieur au système mécanique avant d'être de nouveau utilisable pour la lubrification du système mécanique. Ce circuit de refroidissement comporte un échangeur thermique, par exemple un échangeur thermique huile/air.

Ce circuit de refroidissement extérieur au système mécanique constitue une partie vulnérable d'un circuit de lubrification de ce système mécanique en ce qui concerne les fuites. En effet, ce circuit de refroidissement comporte des conduites, de nombreux raccords et l'échangeur thermique. Ce circuit de refroidissement est alors soumis à des contraintes thermiques, telles qu'une différence importante entre la température de l'huile et la température extérieure, et à des contraintes vibratoires générées par le système mécanique et/ou un véhicule utilisant ce système mécanique. De plus, ce circuit de refroidissement est exposé à l'extérieur du système mécanique. Notamment lorsque ce système mécanique équipe un aéronef, ce circuit de refroidissement est situé à l'extérieur du système mécanique de l'aéronef, par exemple sous un capot. Il peut cependant être ainsi exposé aux chocs avec des oiseaux ou bien avec de la glace par exemple. De fait, une ou plusieurs fuites peuvent apparaître au niveau de ces raccords et de ces conduites ainsi qu'au niveau de l'échangeur thermique, ces fuites étant essentiellement provoquées par ces contraintes vibratoires et thermiques.

De telles fuites permettent en général d'assurer tout de même une lubrification du système mécanique, mais pendant une durée limitée. En effet, l'huile stockée dans le circuit de lubrification, par exemple dans un réservoir, peut alors être évacuée entièrement à l'extérieur du circuit de lubrification par ces fuites. De telles fuites peuvent éventuellement être détectées par une baisse de la pression de l'huile dans le circuit de lubrification.

Par ailleurs, un circuit de lubrification comporte également un générateur de pression telle une pompe afin d'alimenter en huile le circuit de lubrification et de permettre ainsi sa circulation dans le circuit de lubrification. Lors d'une panne de ce générateur de pression, la circulation de l'huile est interrompue et, par suite, la lubrification du système mécanique est également interrompue immédiatement.

En cas de perte de cette lubrification, des dégradations peuvent donc apparaître rapidement sur le fonctionnement du système mécanique. La conséquence de telles dégradations se produisant sur un système mécanique équipant un véhicule automobile par exemple est l'immobilisation du véhicule immédiatement ou bien après l'épuisement de l'huile du circuit de lubrification.

En revanche, si ce système mécanique constitue une boîte de transmission principale de puissance d'un aéronef à voilure tournante, de telles dégradations du circuit de lubrification de la boîte de transmission principale de puissance peuvent alors avoir des conséquences catastrophiques telles qu'un atterrissage d'urgence, voire un crash de l'aéronef.

Afin de pallier ces conséquences, un système mécanique peut comporter un circuit de lubrification de secours. Un tel circuit de lubrification de secours permet d'assurer, lorsque le circuit de lubrification principal est hors service, au moins une lubrification des organes essentiels du système mécanique afin d'assurer le fonctionnement de ce système mécanique. Par sécurité, il est préférable que l'aéronef fonctionne à un niveau de puissance réduit afin de limiter les sollicitations du système mécanique. Ce circuit de lubrification de secours permet alors, lorsque ce système mécanique est par exemple une boîte de transmission principale de puissance d'un aéronef, le fonctionnement du système mécanique et, par suite, celui de l'aéronef, afin d'atteindre un lieu d'atterrissage. Un tel circuit de lubrification de secours améliore ainsi la sécurité de l'aéronef.

Un circuit de lubrification de secours peut être mis en place en parallèle à un circuit de lubrification principal comme décrit dans le document US8230835. Chaque circuit de lubrification comporte sa propre pompe, mais utilise le même réservoir d'huile. Cependant, si ce circuit de secours permet de lubrifier suffisamment un système mécanique en cas de panne du circuit principal, il est dans les faits rarement utilisé. De fait, ce circuit de secours constitue une masse embarquée qui est rarement fonctionnelle.

En outre, les zones d'apparition des fuites du circuit de lubrification principal se situent fréquemment au niveau de l'échangeur thermique et de ses raccordements. De fait, afin d'éviter que de telles fuites apparaissent également sur le circuit de lubrification de secours, le circuit de secours ne comporte pas d'échangeur thermique. De la sorte, l'huile circulant grâce au circuit de secours n'est alors pas refroidie. En conséquence, le circuit de lubrification de secours ne peut être utilisé que pendant une durée limitée afin d'éviter que l'huile atteigne une température trop importante.

Ce circuit de secours est généralement mis en fonctionnement automatiquement suite une perte de pression détectée dans le circuit principal consécutive à une panne de la pompe de ce circuit principal ou bien à une fuite dans ce circuit principal. Ce circuit de lubrification de secours peut également être mis en marche manuellement par un opérateur.

Afin de réduire le risque qu'une défaillance du circuit de lubrification principal provienne du circuit de secours, le circuit de secours est généralement équipé d'un système « by-pass » dont le principe est de fermer la circulation dans les conduites du circuit de secours lorsqu'il y a une pression d'huile suffisante dans le circuit de lubrification principal. Ainsi, en cas de fuite sur le circuit de lubrification de secours, celui-ci n'est plus opérationnel, mais n'entrave pas le fonctionnement du circuit de lubrification principal.

L'inconvénient du système « by-pass » est qu'il laisse la possibilité d'une panne dormante sur le circuit de secours, cette panne n'étant détectée qu'au moment où le circuit de secours est mis en marche. Dans ce cas, il s'agit d'une anomalie majeure pouvant se révéler critique sur un aéronef à voilure tournante.

Pour certaines applications sur des aéronefs à voilure tournante, la boîte de transmission principale de puissance ne comporte pas de circuit de lubrification de secours proprement dit, mais deux circuits de lubrification identiques et indépendants. Chaque circuit de lubrification comporte sa propre pompe et son propre échangeur thermique. Cependant, les deux circuits de lubrification utilisent de façon commune le même réservoir d'huile formé par le fond de la boîte de transmission principale de puissance. De fait, en cas de fuite de l'un des circuits de lubrification, le fond de la boîte transmission principale de puissance va, dans un délai plus ou moins long, se vider et provoquer la défaillance du système de lubrification complet.

Certains systèmes de lubrification comportent un réservoir de secours, parfois directement monté à l'intérieur du système mécanique à lubrifier comme décrit dans les documents EP2505878 et US2007/0261922. Ce réservoir de secours est positionné au-dessus des organes essentiels à lubrifier et alimenté en permanence par le circuit de lubrification. L'huile s'écoule alors par gravité et en permanence depuis ce réservoir de secours sur ces organes essentiels. De fait, en cas de défaillance du circuit de lubrification, ce réservoir de secours n'est plus alimenté, mais permet d'assurer une lubrification de ces organes essentiels pendant un temps limité correspondant à l'épuisement de l'huile contenue dans ce réservoir de secours.

De plus, selon le document US2007/0261922, un additif peut être ajouté à l'huile se trouvant dans ce réservoir de secours suite à la défaillance du circuit de lubrification principal. Cet additif permet d'augmenter les caractéristiques de l'huile améliorant ainsi son efficacité et la durée de fonctionnement du circuit de lubrification de secours formé par ce réservoir de secours.

Par ailleurs, le document US4717000 décrit un système de lubrification pour un turbomoteur comportant un réservoir de secours alimenté en huile par le système de lubrification et utilisé uniquement en cas de défaillance du système de lubrification. De plus, ce réservoir de secours comporte un vérin activé par l'air comprimé sortant d'un compresseur du turbomoteur afin, suite à une défaillance du système de lubrification, de mettre sous pression l'huile stockée dans ce réservoir de secours. Ensuite, un mélange huile-air comprimé est pulvérisé sur des organes essentiels du turbomoteur.

En outre, l'arrière plan technologique du domaine de l'invention comporte les documents JP2002/340152, (état de la technique le plus proche) FR 2685758 et FR 1194993.

La présente invention a alors pour objet de proposer un dispositif de lubrification d'un système mécanique permettant de s'affranchir des limitations mentionnées ci-dessus, permettant la lubrification du système mécanique malgré la présence d'une défaillance sur un circuit de lubrification, notamment sans limitation de la durée de cette lubrification.

Selon l'invention, un dispositif de lubrification à triple circuit, destiné à la lubrification d'un système mécanique, est muni d'un réservoir et de deux circuits de lubrification indépendants. Le réservoir contient un liquide de lubrification tel que de l'huile et est utilisé conjointement par les deux circuits de lubrification afin de lubrifier le système mécanique.

Un premier circuit de lubrification comporte une première pompe, des premières conduites, un premier capteur de pression, un premier filtre, un premier échangeur thermique, des premiers gicleurs et un premier point d'aspiration du liquide de lubrification, le premier point d'aspiration étant situé dans le réservoir. La première pompe distribue par l'intermédiaire du premier point d'aspiration le liquide de lubrification présent dans le réservoir dans les premières conduites et jusqu'aux premiers gicleurs afin de lubrifier le système mécanique.

Un second circuit de lubrification comporte une seconde pompe, des secondes conduites, un second capteur de pression, un second filtre, un second échangeur thermique, des seconds gicleurs et un second point d'aspiration du liquide de lubrification, ce second point d'aspiration étant situé dans le réservoir. La seconde pompe distribue par l'intermédiaire du second point d'aspiration le liquide de lubrification présent dans le réservoir dans les secondes conduites et jusqu'aux seconds gicleurs afin de lubrifier le système mécanique.

Ainsi, les deux circuits de lubrification permettent de lubrifier simultanément le système mécanique.

En outre, les premiers et seconds gicleurs peuvent être constitués par une même série de gicleurs communs aux deux circuits de lubrification. Chaque circuit de lubrification comporte alors un ou plusieurs moyens anti-retours, tels que des clapets anti-retour, évitant ainsi une communication directe entre les deux circuits de lubrification.

Ce dispositif de lubrification à triple circuit est remarquable en ce qu'il comporte un circuit tertiaire dans lequel circule un liquide tertiaire. Ce circuit tertiaire comporte une troisième pompe, des troisièmes conduites, un troisième capteur de pression, le second échangeur thermique et un troisième échangeur thermique. La troisième pompe permet la circulation du liquide tertiaire dans les troisièmes conduites, le second échangeur thermique et le troisième échangeur thermique. De plus, le second point d'aspiration est situé en dessous du premier point d'aspiration dans le réservoir.

Ce système mécanique comporte par exemple des éléments tournants et des éléments de transmission de puissance et de réduction ou d'augmentation de vitesse qui nécessitent d'être lubrifiés et refroidis par un liquide de lubrification tel que de l'huile afin que le système mécanique fonctionne efficacement et durablement.

Ce système mécanique est par exemple une boîte de transmission principale de puissance d'un aéronef à voilure tournante. Dans ce cas, le réservoir du dispositif de lubrification à triple circuit est généralement constitué par un carter de cette boîte de transmission principale de puissance.

Le premier échangeur thermique du premier circuit de lubrification est un échangeur thermique air/liquide utilisé classiquement dans un tel circuit de lubrification. Cet échangeur thermique air/liquide permet ainsi de refroidir le liquide de lubrification qui a été réchauffé en lubrifiant le système mécanique. Cet échangeur thermique air/liquide utilise pour cela l'air situé généralement à proximité du système mécanique.

Le second échangeur thermique du second circuit de lubrification est un échangeur thermique liquide/liquide. Cet échangeur thermique liquide /liquide permet ainsi de refroidir le liquide de lubrification qui a été réchauffé en lubrifiant le système mécanique. Cet échangeur thermique liquide /liquide utilise le liquide tertiaire circulant dans le circuit tertiaire.

Le troisième échangeur thermique du circuit tertiaire est un échangeur thermique air/liquide tel que ceux utilisés classiquement dans un circuit de lubrification. Cet échangeur thermique air/liquide permet ainsi de refroidir le liquide tertiaire qui a été réchauffé en traversant le second échangeur thermique. Cet échangeur thermique air/liquide utilise l'air situé généralement à proximité du système mécanique. Ce liquide tertiaire est par exemple de l'eau, du glycol ou bien de l'huile.

Par ailleurs, le liquide de lubrification circule dans le premier circuit de lubrification avec une première pression P1 et dans le second circuit de lubrification avec une seconde pression P2. Cette première pression P1 est obtenue par l'intermédiaire de la première pompe et cette seconde pression P2 est obtenue par l'intermédiaire de la seconde pompe. Le liquide tertiaire circule dans le circuit tertiaire avec une troisième pression P3 obtenue par l'intermédiaire de la troisième pompe.

En outre, chaque capteur de pression permet de mesurer respectivement la pression P1,P2,P3 du liquide circulant dans le premier et le second circuits de lubrification ainsi que dans le circuit tertiaire. Chaque capteur de pression a notamment pour fonction de détecter une chute de cette pression P1,P2,P3.

Cependant, un capteur de pression ne détecte pas forcément une chute de pression consécutive à une fuite présente sur un circuit de lubrification tant que le liquide de lubrification circule sous pression dans ce circuit de lubrification. En effet, s'il s'agit d'une fuite lente, la dépression du liquide de lubrification générée par cette fuite lente n'est pas détectée par les capteurs de pression généralement utilisés dans un circuit de lubrification.

Par contre, un tel capteur de pression peut détecter une chute de la pression du liquide de lubrification dans un circuit de lubrification engendrée par une fuite importante sur ce circuit de lubrification, consécutivement par exemple à une rupture franche sur une conduite ou bien au niveau d'un échangeur thermique.

Ainsi, lorsqu'une fuite apparait sur le premier circuit de lubrification, cette fuite n'est pas forcément détectée immédiatement par le premier capteur de pression. Par contre, cette fuite sur le premier circuit de lubrification apparait probablement au niveau du premier échangeur thermique ou bien à celui des conduites reliées à ce premier échangeur thermique. Une partie du liquide de lubrification est alors évacuée par cette fuite en dehors du dispositif de lubrification à triple circuit selon l'invention. En conséquence, la hauteur du liquide de lubrification dans le réservoir diminue. Par suite, lorsque le premier point d'aspiration se trouve au dessus du niveau du liquide de lubrification dans le réservoir, la première pompe est désamorcée et ne peut alors plus alimenter le premier circuit de lubrification en liquide de lubrification.

De préférence, ce premier point d'aspiration est situé dans une zone haute du volume de liquide de lubrification présent dans le réservoir afin de permettre une détection rapide d'une telle fuite.

Cette position du premier point d'aspiration est définie avec une marge de sécurité afin de prendre en compte une consommation du liquide de lubrification et éviter des détections intempestives d'une fuite non présente. Cette marge de sécurité sur la position du premier point d'aspiration prend également en compte les mouvements possibles du système mécanique qui peuvent générer un mouvement du liquide de lubrification dans le réservoir et éventuellement des désamorçages de la première pompe d'où, par suite, un arrêt de la lubrification du système mécanique. De tels mouvements ont notamment lieu lorsque le système mécanique équipe un aéronef à voilure tournante, son assiette pouvant varier lors d'un vol et notamment lors de certains vols stationnaires.

De fait, la position du premier point d'aspiration permet automatiquement d'arrêter la circulation du liquide de lubrification dans le premier circuit de lubrification lorsqu'une fuite lente apparait sur ce premier circuit de lubrification. Le système mécanique n'est alors plus lubrifié par le premier circuit de lubrification.

Le système mécanique est alors lubrifié uniquement par le second circuit de lubrification. Le second point d'aspiration doit pour cela être positionné en dessous du premier point d'aspiration afin de permettre d'alimenter le second circuit de lubrification par l'intermédiaire de la seconde pompe malgré la baisse du niveau du liquide de lubrification dans le réservoir. De préférence, le second point d'aspiration est situé dans le fond du réservoir.

Le système mécanique étant lubrifié uniquement par le second circuit de lubrification, il convient de limiter les sollicitations du système mécanique afin que ces sollicitations soient en accord avec la lubrification réduite qui est faite sur ce système mécanique. Par exemple, lorsque le système mécanique est une boîte de transmission principale de puissance équipant un aéronef à voilure tournante, la vitesse de l'aéronef doit être réduite dès que la lubrification du système mécanique est réduite.

Cette détection d'une chute de la pression du liquide de lubrification dans le premier circuit de lubrification consécutive à une baisse du niveau du liquide de lubrification dans le réservoir en dessous de la position du premier point d'aspiration peut déclencher un signal sonore et/ou visuel pour alerter un opérateur de la présence de cette fuite et de la lubrification réduite du système mécanique. Cet opérateur peut être un pilote d'un aéronef lorsque le système mécanique équipe cet aéronef.

Par ailleurs, une fuite peut également apparaître sur le second circuit de lubrification.

Si la fuite se trouve au niveau du second échangeur, le liquide de lubrification n'est alors pas évacué vers l'extérieur du dispositif de lubrification selon l'invention, mais se mélange avec le liquide tertiaire du circuit tertiaire. Le niveau du liquide de lubrification dans le réservoir reste alors sensiblement inchangé malgré cette fuite sur le second échangeur du second circuit de lubrification. Avantageusement, la lubrification du système mécanique par le second circuit de lubrification est maintenue, malgré cette fuite, cette lubrification étant assurée par un mélange constitué par le liquide de lubrification et le liquide tertiaire.

En outre, selon la composition du liquide tertiaire et suite à cette fuite, il est généralement nécessaire de purger les deux circuits de lubrification et le réservoir afin de remplacer ce mélange par du liquide de lubrification après réparation de la fuite.

De plus, le second échangeur est positionné de préférence au dessus du réservoir ou bien en appui contre une paroi latérale de ce réservoir. De fait, l'ensemble des secondes conduites est situé au dessus du réservoir de même que les composants du second circuit de lubrification à l'exception éventuellement du second échangeur thermique.

Ainsi, une fuite apparaissant sur une seconde conduite, un des composants du second circuit de lubrification à l'exception du second échangeur thermique ou bien un des raccords entre les secondes conduites et le second échangeur thermique n'engendre avantageusement aucune perte de liquide de lubrification. En effet, le liquide de lubrification s'évacue alors par cette fuite dans le réservoir et rejoint alors le liquide de lubrification stocké dans ce réservoir.

En conséquence, le niveau du liquide de lubrification dans le réservoir est inchangé malgré cette fuite sur le second circuit de lubrification. La lubrification du système mécanique par le second circuit de lubrification est alors maintenue, malgré cette fuite, et le refroidissement du liquide de lubrification circulant dans le second circuit de lubrification est assuré, garantissant ainsi l'efficacité de cette lubrification.

Le second échangeur thermique peut être situé à l'intérieur du système mécanique tout en étant placé au dessus du réservoir. Par exemple, le système mécanique est une boîte de transmission principale de puissance destinée à un aéronef à voilure tournante et le second échangeur thermique est positionné au dessus d'un carter de la boîte de transmission principale de puissance formant le réservoir du dispositif de lubrification à triple circuit.

Par contre, si une fuite apparait sur le circuit tertiaire, le liquide tertiaire est évacué à l'extérieur du circuit tertiaire, et généralement à l'extérieur du dispositif de lubrification à triple circuit, entraînant à terme la perte de la totalité du liquide tertiaire. Cette perte de la totalité du liquide tertiaire se caractérise par une chute de la troisième pression P3 de ce liquide tertiaire dans le circuit tertiaire. Cette chute de la troisième pression P3 est détectée par l'intermédiaire du troisième capteur de pression.

Une chute de la troisième pression P3 est également détectée par l'intermédiaire du troisième capteur de pression en cas fuite importante sur ce circuit tertiaire telle qu'une rupture franche d'une troisième conduite ou bien au niveau du troisième échangeur thermique. Aucun liquide tertiaire ne circule alors dans le second échangeur. Par suite le refroidissement du liquide de lubrification circulant dans le second circuit de lubrification n'est pas assuré.

La lubrification du système mécanique est alors toujours réalisée par les deux circuits de lubrification, mais le refroidissement du liquide de lubrification n'est plus assuré que pour le premier circuit de lubrification. Le système mécanique est alors lubrifié efficacement uniquement par le premier circuit de lubrification. Il convient alors, comme lorsque la lubrification du système mécanique est réduite et assurée uniquement par le second circuit de lubrification, de limiter les sollicitations du système mécanique.

Cette détection d'une chute de la pression du liquide tertiaire dans le circuit tertiaire, qu'elle soit consécutive à la perte de la totalité du liquide tertiaire dans le circuit tertiaire ou bien suite à une fuite importante sur ce circuit tertiaire, peut déclencher un signal sonore et/ou visuel pour alerter un opérateur de la présence de cette fuite et de la lubrification réduite du système mécanique.

Selon un premier mode de réalisation du dispositif de lubrification à triple circuit selon l'invention, la seconde pression P2 du liquide de lubrification dans le second circuit de lubrification est strictement supérieure à la troisième pression P3 du liquide tertiaire dans le circuit tertiaire. De préférence, la seconde pression P2 est nettement supérieure à la troisième pression P3.

Par exemple, la seconde pression P2 est égale à trois bars alors que la troisième pression P3 est égale à un bar.

De fait, lorsqu'une fuite apparait sur le second circuit dans le second échangeur, le liquide de lubrification circulant dans le second circuit avec la seconde pression P2 s'évacue dans le circuit tertiaire dans lequel le liquide tertiaire est à la troisième pression P3 strictement inférieure à la seconde pression P2. Le circuit tertiaire doit être un circuit fermé afin d'éviter que le liquide de lubrification présent dans le réservoir s'évacue progressivement et entièrement dans le circuit tertiaire en circulant dans le second circuit de lubrification.

En effet, si le circuit tertiaire était ouvert et puisait le liquide tertiaire dans un réservoir tertiaire, la totalité du liquide de lubrification se viderait dans ce réservoir tertiaire arrêtant alors toute lubrification du système mécanique par le premier et le second circuits de lubrification.

Le circuit tertiaire étant donc un circuit fermé, la troisième pression P3 augmente jusqu'à être égale à la seconde pression P2. Une fois cet équilibre des seconde et troisième pressions P2,P3 atteint ou bien à proximité de cet équilibre, le liquide tertiaire peut également circuler dans le second circuit de lubrification, sans poser pas de problème de fonctionnement ou bien de sécurité.

En effet, le liquide tertiaire est choisi en priorité pour ces capacités en tant que liquide caloporteur. Cependant le liquide tertiaire est également choisi en prenant en compte ce risque et permet à ce mélange de liquide de lubrification et de liquide tertiaire d'assurer une lubrification en fonctionnement dégradé. Le liquide tertiaire peut être par exemple, du glycol, de l'eau ou bien de l'huile.

De plus, ce mélange est toujours refroidi par l'intermédiaire du troisième échangeur. Le système mécanique peut alors continuer de fonctionner normalement sans restriction.

La seconde pression P2 étant nettement supérieure à la troisième pression P3, le troisième capteur de pression permet de détecter l'augmentation de la troisième pression P3 jusqu'à la valeur de la seconde pression P2 et de déclencher un signal sonore et/ou visuel pour alerter un opérateur d'une part de la présence de cette fuite, et d'autre part de la lubrification normale du système mécanique, le liquide de lubrification circulant dans les premier et second circuits de lubrification étant suffisamment refroidi. Par contre, les premier et second circuits de lubrification ainsi que le circuit tertiaire et le réservoir doivent être ensuite purgés après réparation de la fuite.

Selon un second mode de réalisation du dispositif de lubrification à triple circuit selon l'invention, la seconde pression P2 du liquide de lubrification est strictement inférieure à la troisième pression P3 du liquide tertiaire. Là encore, la troisième pression P3 est de préférence nettement supérieure à la seconde pression P2.

Par exemple, la seconde pression P2 est égale à trois bars alors que la troisième pression P3 est comprise entre cinq et dix bars.

De fait, lorsqu'une fuite apparait sur le second circuit de lubrification dans le second échangeur, le liquide tertiaire circulant dans le circuit tertiaire avec la troisième pression P3 s'évacue dans le second échangeur puis dans le second circuit de lubrification dans lequel le liquide de lubrification est à la seconde pression P2 strictement inférieure à la troisième pression P3. De la sorte, le niveau de liquide dans le réservoir augmente, le réservoir contenant alors un mélange de liquide de lubrification et de liquide tertiaire. Par contre, le circuit tertiaire se vide ainsi complètement du liquide tertiaire qu'il contient.

En conséquence, le liquide tertiaire ne circule plus dans le troisième échangeur et, par suite, le liquide de lubrification n'est plus refroidi dans le second échangeur. La lubrification du système mécanique est alors toujours réalisée par les deux circuits de lubrification, mais le refroidissement du liquide de lubrification n'est plus assuré que par le premier circuit de lubrification. Le système mécanique est alors lubrifié efficacement uniquement par le premier circuit de lubrification. Il convient dès lors, comme lorsque la lubrification du système mécanique est réduite et assurée uniquement par le second circuit de lubrification, de limiter les sollicitations du système mécanique.

En outre, la troisième pression P3 du liquide tertiaire dans le circuit tertiaire chute dès que ce circuit tertiaire est vide. Cette détection d'une chute de la troisième pression P3 par le troisième capteur de pression peut déclencher un signal sonore et/ou visuel pour alerter un opérateur de cette perte du refroidissement du liquide de lubrification dans le second circuit de lubrification et de la réduction nécessaire des sollicitations du système mécanique.

Lorsque le circuit tertiaire est un circuit fermé, ce circuit tertiaire peut se vider assez rapidement, selon le débit au niveau de la fuite. La fuite a alors pour conséquence rapide l'arrêt du refroidissement du liquide de lubrification circulant dans le second circuit de lubrification et, par suite, une lubrification réduite du système mécanique.

Afin de retarder la perte du refroidissement du liquide de lubrification circulant dans le second circuit de lubrification suite à cette fuite, il est possible d'utiliser un réservoir tertiaire dans lequel le circuit tertiaire puise le liquide tertiaire. La quantité de liquide tertiaire utilisable par le circuit tertiaire est alors plus importante que dans le cas d'un circuit tertiaire fermé, permettant ainsi de refroidir le liquide de lubrification dans le second échangeur pendant une durée limitée, mais plus importante que dans le cas d'un circuit tertiaire fermé. Ce réservoir tertiaire est distinct et indépendant du réservoir dans lequel les premier et second circuits puisent le liquide de lubrification.

Le circuit tertiaire comporte alors, outre ce réservoir tertiaire, un troisième point d'aspiration situé dans le réservoir tertiaire. La troisième pompe distribue par l'intermédiaire du troisième point d'aspiration le liquide tertiaire dans les troisièmes conduites et les second et troisième échangeurs thermiques.

Par ailleurs, dans le cadre d'une variante applicable aux deux modes de réalisation de l'invention, le circuit tertiaire peut également être utilisé en tant que circuit de lubrification de secours en cas de chutes simultanées ou bien séquentielles de la première et de la seconde pressions P1,P2 dans les premier et second circuits de lubrification. Ces chutes peuvent être consécutives à des pannes des première et seconde pompes ou plus probablement à une fuite apparue directement sur le réservoir du dispositif de lubrification. Suite à ces chutes des première et seconde pressions P1,P2, aucune lubrification du système mécanique n'est assurée par les premier et second circuits de lubrification.

Le circuit tertiaire comporte alors une vanne tertiaire et des troisièmes gicleurs. Des conduites tertiaires permettent la circulation du liquide tertiaire jusqu'à la vanne tertiaire, puis entre la vanne tertiaire et les troisièmes gicleurs. Ces gicleurs permettent alors de pulvériser le liquide tertiaire sur le système mécanique afin de le lubrifier.

Là encore, les premiers, seconds et troisièmes gicleurs peuvent être constitués par une même série de gicleurs communs aux deux circuits de lubrification et au circuit tertiaire. Les premier et second circuits de lubrification ainsi que le circuit tertiaire comportent alors respectivement un ou plusieurs moyens anti-retours, tels que des clapets anti-retour, évitant ainsi une communication directe entre les deux circuits de lubrification et le circuit tertiaire.

Ainsi, une chute des première et seconde pressions P1,P2 détectées par les premier et second capteurs de pression commande l'ouverture de la vanne tertiaire. Le liquide tertiaire circule alors jusqu'aux troisièmes gicleurs afin de lubrifier le système mécanique pendant une durée limitée. Cette durée limitée est fonction de la quantité de liquide tertiaire circulant dans le circuit tertiaire. Cette durée limitée est généralement plus importante pour un circuit tertiaire ouvert comportant un réservoir tertiaire que pour un circuit tertiaire fermé.

Cette détection d'une chute des première et seconde pressions P1,P2 par les premier et second capteurs de pression, peut également déclencher un signal sonore et/ou visuel pour alerter un opérateur de la perte de la lubrification du système mécanique par les premier et second circuits de lubrification. Cet opérateur sait alors que la lubrification du système mécanique est assurée par un circuit de secours pendant une durée limitée et qu'il doit arrêter rapidement le système mécanique.

Notamment si le système mécanique équipe un aéronef à voilure tournante, cet aéronef doit être dirigé rapidement vers un lieu d'atterrissage.

Ce dispositif de lubrification à triple circuit permet ainsi de proposer un système global et sécurisé de lubrification d'un système mécanique à fiabilité augmentée, ce dispositif de lubrification étant composé de deux sous-systèmes de lubrification complets et indépendants, à l'exception d'un réservoir de liquide de lubrification commun, et d'un circuit tertiaire de refroidissement.

De plus, ce dispositif de lubrification évite la défaillance complète de la lubrification du système mécanique suite à l'épuisement du liquide de lubrification du réservoir en cas de fuite lente par exemple sur un circuit de lubrification, une telle fuite lente n'étant pas détectable par des capteurs de pression.

Il n'y a ainsi généralement pas de limitation de la durée de lubrification suite à la détection d'une fuite sur un circuit de lubrification tout en assurant un refroidissement par au moins un circuit de lubrification du liquide de lubrification.

La présente invention a aussi pour objet une boîte de transmission principale de puissance destinée à un aéronef à voilure tournante. Cette boîte de transmission principale de puissance est munie d'un dispositif de lubrification à triple circuit comme précédemment décrit. Le réservoir du dispositif de lubrification à triple circuit est constitué par un carter de la boîte de transmission principale de puissance. Le second échangeur peut alors être positionné directement dans cette boîte de transmission principale de puissance afin de limiter les raccords et les secondes conduites. De fait, toute fuite sur le second circuit de lubrification évacuera le liquide de lubrification dans la boîte de transmission principale de puissance et, par suite, dans le réservoir ou bien dans le second échangeur et, par suite, dans le circuit tertiaire.

Avantageusement, aucun système spécifique de lubrification de secours, dont l'utilisation est très occasionnelle et uniquement en cas de défaillance d'un système de lubrification principal et dont la masse peut alors être pénalisante, n'est installé sur la boîte de transmission principale de puissance. En effet, le circuit de lubrification de secours éventuellement présent sur le dispositif de lubrification à triple circuit fait partie intégrante du circuit tertiaire qui est utilisé en permanence afin de refroidir le liquide de lubrification circulant dans le second circuit de lubrification.

L'invention et ses avantages apparaîtront avec plus de détails dans le cadre de la description qui suit avec des exemples donnés à titre illustratif en référence aux figures annexées qui représentent :

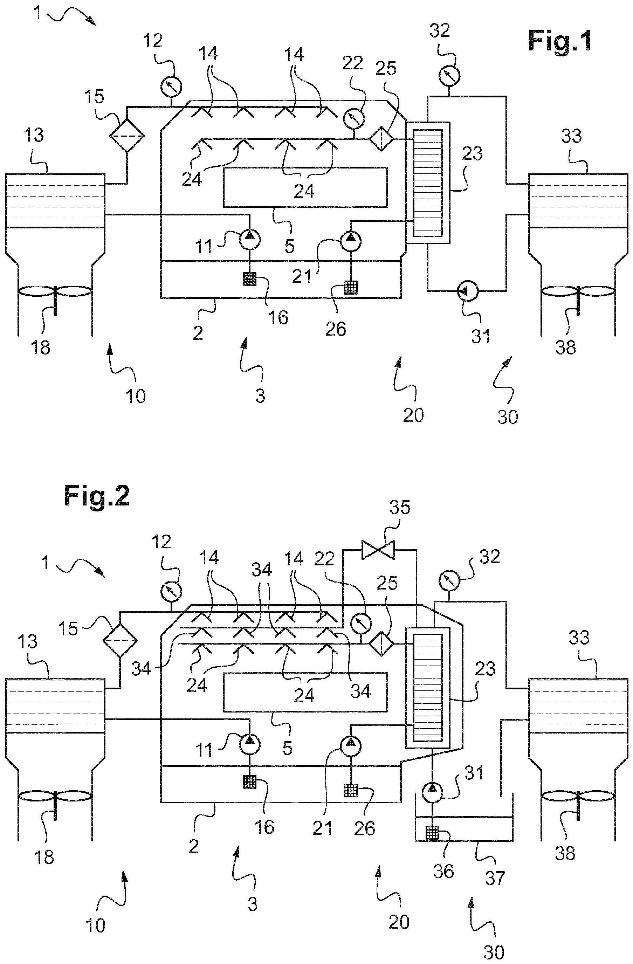

- les figures 1 et 2, deux modes de réalisation du dispositif de lubrification à triple circuit.

Les éléments présents dans plusieurs figures distinctes sont affectés d'une seule et même référence.

Deux modes de réalisation d'un dispositif de lubrification 1 à triple circuit, représentés sur les figures 1 et 2, ont pour fonction de lubrifier un système mécanique 3 comportant notamment des éléments tournants 5, tels que des arbres et des roulements, ainsi que des éléments de transmission de puissance et de réduction ou d'augmentation de vitesse 5, tels que des pignons et/ou des engrenages. Ce système mécanique 3 est par exemple une boîte de transmission principale de puissance équipant un aéronef à voilure tournante.

Chaque dispositif de lubrification 1 à triple circuit comporte un réservoir 2, deux circuits de lubrification 10,20 permettant de lubrifier simultanément le système mécanique 3 et un circuit tertiaire 30. Le réservoir 2 est formé par un carter du système mécanique 3 et contient un liquide de lubrification.

Chaque circuit de lubrification 10,20 comporte une pompe 11,21, un capteur de pression 12,22, un échangeur thermique 13,23, un filtre 15,25, des gicleurs 14,24, un point d'aspiration 16,26 et des conduites reliant respectivement les composants de chaque circuit de lubrification 10,20. Les points d'aspiration 16,26 sont situés dans le réservoir 2. Le second point d'aspiration 26 est positionné au fond de ce réservoir 2 alors que le premier point d'aspiration 16 est positionné légèrement en dessous de la surface du liquide de lubrification dans ce réservoir 2. Ainsi, le second point d'aspiration 26 est positionné en dessous du premier point d'aspiration 16.

Chaque pompe 11,21 permet de puiser le liquide de lubrification dans le réservoir 2 par l'intermédiaire d'un point d'aspiration 16,26 et de distribuer le liquide de lubrification dans chaque circuit de lubrification 10,20. Chaque échangeur thermique 13,23 permet de refroidir le liquide de lubrification avant qu'il atteigne les gicleurs 14,24 en passant à travers les filtres 15,25.

Le premier échangeur thermique 13 est positionné à l'extérieur du système mécanique 3. Le premier échangeur thermique 13 est un échangeur thermique air/liquide permettant de refroidir le liquide de lubrification qui a été réchauffé en lubrifiant le système mécanique 3. Cet échangeur thermique air/liquide utilise l'air situé à proximité du système mécanique 3. Un premier système de ventilation 18 permet d'activer la circulation de l'air balayant ce premier échangeur thermique 13.

Le second échangeur thermique 23 est un échangeur thermique liquide/liquide. Cet échangeur thermique liquide /liquide permet de refroidir le liquide de lubrification qui a été réchauffé en lubrifiant le système mécanique 3. Cet échangeur thermique liquide /liquide utilise un liquide tertiaire circulant dans le circuit tertiaire 30.

Le circuit tertiaire 30 comporte un troisième échangeur thermique 33 qui est un échangeur thermique air/liquide. Ce troisième échangeur thermique 33 est positionné à l'extérieur du système mécanique 3 et permet de refroidir le liquide tertiaire qui a été réchauffé en traversant le second échangeur thermique. Cet échangeur thermique air/liquide utilise l'air situé à proximité du système mécanique 3. Un second système de ventilation 38 permet d'activer la circulation de l'air balayant ce troisième échangeur thermique 33.

Par exemple, le liquide tertiaire 30 est de l'eau, du glycol ou bien de l'huile alors que le liquide de lubrification est de l'huile.

Selon un premier mode de réalisation du dispositif de lubrification 1 à triple circuit représenté sur la figure 1, le circuit tertiaire 30 est un circuit fermé et comporte une troisième pompe 31, un troisième capteur de pression 32, le second échangeur thermique 23, le troisième échangeur thermique 33 et des troisièmes conduites reliant respectivement les composants de ce circuit tertiaire 30.

Le second échangeur thermique 23 est positionné contre une paroi du réservoir 2. De fait, les secondes conduites du second circuit de lubrification 20 ainsi que les composants 21,22,24,25 de ce second circuit de lubrification 20, à l'exception de ce second échangeur thermique 23, sont situés à l'intérieur du système mécanique 3 et au dessus du réservoir 2.

De fait, toute fuite apparaissant sur ce second circuit de lubrification 20 à l'exception d'une fuite dans le second échangeur 23 évacue du liquide de lubrification directement dans le réservoir 2. C'est par exemple le cas pour une fuite au niveau des raccords entre les secondes conduites et le second échangeur thermique 23. Par suite, il n'y a aucune perte de liquide de lubrification à l'extérieur du dispositif de lubrification 1 suite à cette fuite et la lubrification du système mécanique 3 est assurée efficacement par les deux circuits de lubrification 10,20.

Le liquide tertiaire 30 circule en boucle fermée par l'intermédiaire de la troisième pompe 31 dans le second échangeur thermique 23 où il est réchauffé en refroidissant le liquide de lubrification circulant dans le second circuit de lubrification 20, puis dans le troisième échangeur thermique 33 dans lequel il est refroidi grâce à l'air.

Par ailleurs le liquide de lubrification circule dans le second circuit de lubrification 20 avec une seconde pression P2 qui est strictement supérieure à la troisième pression P3 du liquide tertiaire circulant dans le circuit tertiaire 30.

Lors d'une fuite du second circuit de lubrification 20 dans l'échangeur thermique 23, le liquide de lubrification s'évacue alors dans le circuit tertiaire 30. La troisième pression P3 augmente alors jusqu'à être égale à la seconde pression P2. De fait, le liquide de lubrification ne s'évacue pas à l'extérieur du dispositif de lubrification 1 à triple circuit.

De plus, le circuit tertiaire 30 étant un circuit fermé, la quantité de liquide de lubrification s'évacuant dans le circuit tertiaire 30 reste limitée. En conséquence, le niveau du liquide de lubrification est sensiblement inchangé dans le réservoir 2.

En outre, un mélange constitué par le liquide de lubrification et le liquide tertiaire circulant dans le circuit tertiaire 30 traverse le troisième échangeur thermique 33 et est ainsi refroidi. Par suite, le liquide de lubrification circulant dans le second circuit de lubrification 20 est alors refroidi dans le second échangeur thermique 23 par l'intermédiaire de ce mélange.

La lubrification du système mécanique 3 est ainsi réalisée efficacement par le premier circuit de lubrification 10 et le second circuit de lubrification 20, sans limitation de durée, malgré la présence de cette fuite dans le second échangeur thermique 23.

Selon un second mode de réalisation du dispositif de lubrification 1 à triple circuit représenté sur la figure 2, le circuit tertiaire 30 est un circuit ouvert et comporte une troisième pompe 31, un réservoir tertiaire 37, un troisième capteur de pression 32, le second échangeur thermique 23, un troisième échangeur thermique 33, un troisième point d'aspiration 36 et des troisièmes conduites reliant respectivement les composants de ce circuit tertiaire 30. Ce circuit tertiaire 30 comporte également une vanne tertiaire 35 et des troisièmes gicleurs 34.

Le second échangeur thermique 23 est positionné à l'intérieur du système mécanique 3 et au dessus du réservoir 2. De fait, les secondes conduites du second circuit de lubrification 20 ainsi que tous les composants 21,22,23,24,25 de ce second circuit de lubrification 20 sont situés à l'intérieur du système mécanique 3 et au dessus du réservoir 2.

De même que pour le premier mode de réalisation de ce dispositif de lubrification 1, toute fuite apparaissant sur ce second circuit de lubrification 20 à l'exception d'une fuite dans le second échangeur 23 évacue du liquide de lubrification directement dans le réservoir 2. Par suite, il n'y a aucune perte de liquide de lubrification à l'extérieur du dispositif de lubrification 1 suite à cette fuite et la lubrification du système mécanique 3 est assurée efficacement par les deux circuits de lubrification 10,20.

Le liquide tertiaire est puisé par la troisième pompe 31 dans le réservoir tertiaire 37, puis circule dans le second échangeur thermique 23 où il est réchauffé en refroidissant le liquide de lubrification circulant dans le second circuit de lubrification 20, puis dans le troisième échangeur thermique 33 dans lequel il est refroidi grâce à l'air et revient enfin dans le réservoir tertiaire 37.

Par ailleurs le liquide de lubrification circule dans le second circuit de lubrification 20 avec une seconde pression P2 qui est strictement inférieure à la troisième pression P3 du liquide tertiaire circulant dans le circuit tertiaire 30.

Lors d'une fuite du second circuit de lubrification 20 dans l'échangeur thermique 23, le liquide tertiaire s'évacue alors dans le second circuit de lubrification 20. Par suite, la totalité du liquide tertiaire va ainsi s'évacuer dans le second circuit de lubrification 20, puis dans le réservoir 2. Le réservoir 2 contient ainsi un mélange constitué par le liquide de lubrification et le liquide tertiaire.

Le liquide de lubrification circule toujours dans le second circuit 20, traverse le second échangeur 23 et atteint les gicleurs 24 afin de lubrifier le système mécanique 3. Par contre, il n'y a plus de liquide tertiaire dans le circuit tertiaire 30. En conséquence, le liquide de lubrification n'est plus refroidi dans le second échangeur thermique 23. La lubrification assurée par le second circuit de lubrification 20 n'est donc pas efficace.

La lubrification du système mécanique 3 est ainsi réalisée efficacement uniquement par le premier circuit de lubrification 10 suite à la présence de cette fuite dans le second échangeur thermique 23.

Il convient alors de réduire les sollicitations du système mécanique 3, la lubrification de ce système mécanique 3 étant réduite.

Par ailleurs, le circuit tertiaire 30 fait également fonction de circuit de lubrification de secours suite à une chute de pression dans les deux circuits de lubrification 10,20. En effet, lors d'une telle chute de la pression dans ces deux circuits de lubrification 10,20, la vanne tertiaire 35 est ouverte afin de permettre au liquide tertiaire circulant dans le circuit tertiaire 30 d'atteindre les gicleurs 34 et de lubrifier ainsi le système mécanique 3. Par contre, cette lubrification s'effectue pendant une durée limitée, selon la quantité de liquide tertiaire contenu dans le réservoir tertiaire 37.

Dans ce cas, le système mécanique 3 doit être arrêté rapidement afin de ne pas subir de dégradation lorsqu'il ne sera plus lubrifié.

Lorsqu'une fuite apparait sur le circuit tertiaire 30, que ce soit pour le premier ou bien le second mode de réalisation du dispositif de lubrification 1 à triple circuit, le liquide tertiaire s'évacue alors à l'extérieur du dispositif de lubrification 1 à triple circuit et du système mécanique 3. Le circuit tertiaire 30 se vide ainsi complètement du liquide tertiaire suite à cette fuite. Le refroidissement du liquide de lubrification du second circuit de lubrification 20 n'est alors plus assuré dans le second échangeur thermique 23.

La lubrification du système mécanique 3 est ainsi réalisée efficacement uniquement par le premier circuit de lubrification 10 suite à la présence de cette fuite sur le circuit tertiaire 30. Il convient alors de réduire les sollicitations du système mécanique 3, la lubrification de ce système mécanique 3 étant réduite.

De même, lorsqu'une fuite apparait sur le premier circuit de lubrification 10, que ce soit pour le premier ou bien le second mode de réalisation du dispositif de lubrification 1 à triple circuit, le liquide de lubrification circulant dans ce premier circuit de lubrification 10 s'évacue alors à l'extérieur du dispositif de lubrification 1 à triple circuit et du système mécanique 3. Le niveau de liquide de lubrification présent dans le réservoir 2 diminue et dès qu'il est en dessous du niveau du premier point d'aspiration 16, la première pompe 11 est désamorcée et la circulation du liquide de lubrification dans le premier circuit de lubrification 10 est arrêtée suite à cette fuite. La lubrification du système mécanique 3 n'est alors plus assurée par le premier circuit de lubrification 10.

La lubrification du système mécanique 3 est ainsi réalisée efficacement uniquement par le second circuit de lubrification 20 suite à la présence de cette fuite sur le premier circuit de lubrification 10. Il convient alors de réduire les sollicitations du système mécanique 3, la lubrification de ce système mécanique 3 étant réduite.

Ce dispositif de lubrification 1 à triple circuit permet ainsi de proposer un système de lubrification d'un système mécanique 3 à fiabilité augmentée. Ce dispositif de lubrification 1 à triple circuit permet d'assurer en permanence un refroidissement du liquide de lubrification et n'a pas de limitation de la durée de lubrification suite à la détection d'une fuite, excepté dans le cas exceptionnel d'une perte simultanée des deux circuits de lubrification 10,20.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de lubrification (1) à triple circuit d'un système mécanique (3), ledit dispositif de lubrification (1) étant muni d'un réservoir (2) et de deux circuits de lubrification (10,20), ledit réservoir (2) contenant un liquide de lubrification, un premier circuit de lubrification (10) comportant une première pompe (11), des premières conduites, un premier capteur de pression (12), un premier échangeur thermique (13), des premiers gicleurs (14) et un premier point d'aspiration (16) dudit liquide de lubrification, un second circuit de lubrification (20) comportant une seconde pompe (21), des secondes conduites, un second capteur de pression (22), un second échangeur thermique (23), des seconds gicleurs (24) et un second point d'aspiration (26) dudit liquide de lubrification, lesdits premier et second points d'aspiration (16,26) étant situés dans ledit réservoir (2), chaque pompe (11,21) distribuant par l'intermédiaire desdits premier et second points d'aspiration (16,26) ledit liquide de lubrification respectivement dans lesdites premières et secondes conduites, puis dans lesdits premiers et seconds gicleurs (14,24) afin de lubrifier ledit système mécanique (3),
**caractérisé en ce que**, ledit dispositif de lubrification (1) à triple circuit comporte un circuit tertiaire (30) dans lequel circule un liquide tertiaire, ledit circuit tertiaire (30) comportant une troisième pompe (31), des troisièmes conduites, un troisième capteur de pression (32), ledit second échangeur thermique (23) et un troisième échangeur thermique (33), ladite troisième pompe (31) permettant la circulation dudit liquide tertiaire dans ledit second échangeur thermique (23) et ledit troisième échangeur thermique (33), ledit second point d'aspiration (26) étant situé en dessous dudit premier point d'aspiration (16).

2. Dispositif de lubrification (1) selon la revendication 1, **caractérisé en ce que** ledit circuit tertiaire (30) est un circuit fermé.

3. Dispositif de lubrification (1) selon la revendication 1,
**caractérisé en ce que** ledit circuit tertiaire (30) comporte un réservoir tertiaire (37) et un troisième point d'aspiration (36), ledit troisième point d'aspiration (36) étant situé dans ledit réservoir tertiaire (37), ladite troisième pompe (31) distribuant par l'intermédiaire dudit troisième point d'aspiration (36) ledit liquide tertiaire dans lesdites troisièmes conduites et lesdits second et troisième échangeurs thermiques (23,33).

4. Dispositif de lubrification (1) selon l'une quelconque des revendications 1 à 2,
**caractérisé en ce que**, ledit liquide de lubrification circulant dans ledit second circuit de lubrification (20) avec une seconde pression P2, ledit liquide tertiaire circulant dans ledit circuit tertiaire (30) avec une troisième pression P3, la seconde pression P2 dudit liquide de lubrification est strictement supérieure à ladite troisième pression P3 dudit liquide tertiaire.

5. Dispositif de lubrification (1) selon l'une quelconque des revendications 1 à 3,
**caractérisé en ce que**, ledit liquide de lubrification circulant dans ledit second circuit de lubrification (20) avec une seconde pression P2, ledit liquide tertiaire circulant dans ledit circuit tertiaire (30) avec une troisième pression P3, la seconde pression P2 dudit liquide de lubrification est strictement inférieure à ladite troisième pression P3 dudit liquide tertiaire.

6. Dispositif de lubrification (1) selon l'une quelconque des revendications 1 à 5,
**caractérisé en ce que** ledit second échangeur thermique (23) est apte à être situé à l'intérieur dudit système mécanique (3).

7. Dispositif de lubrification (1) selon l'une quelconque des revendications 1 à 6,
**caractérisé en ce que** ledit second échangeur thermique (23) est apte à être situé au dessus dudit réservoir (2).

8. Dispositif de lubrification (1) selon l'une quelconque des revendications 1 à 5,
**caractérisé en ce que** ledit second échangeur thermique (23) est apte à être situé contre une paroi dudit réservoir (2).

9. Dispositif de lubrification (1) selon l'une quelconque des revendications 1 à 8,
**caractérisé en ce que** ledit circuit tertiaire (30) comporte une vanne tertiaire (38) et des troisièmes gicleurs (34).

10. Dispositif de lubrification (1) selon l'une quelconque des revendications 1 à 9,
**caractérisé en ce que** ledit système mécanique (3) est une boîte de transmission principale de puissance (31) d'un aéronef à voilure tournante (30).

11. Boîte de transmission principale de puissance destinée à un aéronef à voilure tournante,
**caractérisée en ce que** ladite boîte de transmission principale de puissance est munie d'un dispositif de lubrification (1) selon la revendication 10, ledit réservoir (2) étant constitué par un carter de ladite boîte de transmission principale de puissance.

## Patentansprüche

1. Schmiervorrichtung (1) eines mechanischen Systems (3) mit einem Dreifachkreislauf, wobei die Schmiervorrichtung (1) einen Tank (2) und zwei Schmierkreisläufe (10, 20) aufweist, wobei der Tank (2) eine Schmierflüssigkeit beinhaltet, wobei ein erster Schmierkreislauf (10) eine erste Pumpe (11), erste Leitungen, einen ersten Drucksensor (12), einen ersten Wärmetauscher (13), erste Sprinkler (14), und eine erste Absaugstelle (16) der Schmierflüssigkeit aufweist, wobei ein zweiter Schmierkreislauf (20) eine zweite Pumpe (21), zweite Leitungen, einen zweiten Drucksensor (22), und einen zweiten Wärmetauscher (23), zweite Sprinkler (24), und eine zweite Absaugstelle (26) der Schmierflüssigkeit aufweist, wobei die erste und die zweite Absaugstelle (16, 26) in dem Tank (2) angeordnet sind, wobei jede Pumpe (11, 21) über die erste und die zweite Absaugstelle (16, 26) die Schmierflüssigkeit jeweils in den ersten und zweiten Leitungen und anschließend in dem ersten und dem zweiten Sprinkler (14, 24) verteilt, um das mechanische System (3) zu schmieren,
**dadurch gekennzeichnet, dass** die Schmiervorrichtung (1) mit Dreifachkreislauf einen dritten Kreislauf (30) aufweist, in dem eine dritte Flüssigkeit zirkuliert, wobei der dritte Kreislauf (30) eine dritte Pumpe (31), dritte Leitungen, einen dritten Drucksensor (32), den zweiten Wärmetauscher (23) und einen dritten Wärmetauscher (33) aufweist, wobei die dritte Pumpe (31) den Umlauf der dritten Flüssigkeit in dem zweiten Wärmetauscher (23) und in dem dritten Wärmetauscher (33) ermöglicht, wobei die zweite Absaugstelle (26) unterhalb der ersten Absaugstelle (16) angeordnet ist.

2. Schmiervorrichtung (1) nach Anspruch 1,
**dadurch gekennzeichnet, dass** der dritte Kreislauf (30) ein geschlossener Kreislauf ist.

3. Schmiervorrichtung (1) nach Anspruch 1,
**dadurch gekennzeichnet, dass** der dritte Kreislauf (30) einen dritten Tank (37) und eine dritte Absaugstelle (36) aufweist, wobei die dritte Absaugstelle (36) in dem dritten Tank (37) angeordnet ist, wobei die dritte Pumpe (31) durch den dritten Absaugpunkt (36) die dritte Flüssigkeit in den dritten Leitungen und dem zweiten und dem dritten Wärmetauscher (23, 33) verteilt.

4. Schmiervorrichtung (1) nach einem der Ansprüche 1 bis 2,
**dadurch gekennzeichnet, dass** die Schmierflüssigkeit in dem zweiten Schmierkreislauf (20) mit einem zweiten Druck P2 zirkuliert, wobei die dritte Flüssigkeit in dem dritten Kreislauf (30) mit einem dritten Druck P3 zirkuliert, wobei der zweite Druck P2 der Schmierflüssigkeit unbedingt größer ist als der dritte Druck P3 der dritten Flüssigkeit.

5. Schmiervorrichtung (1) nach einem der Ansprüche 1 bis 3,
**dadurch gekennzeichnet, dass** die Schmierflüssigkeit in dem zweiten Schmierkreislauf (20) mit einem zweiten Druck P2 zirkuliert, wobei die dritte Flüssigkeit in dem dritten Kreislauf (30) mit einem dritten Druck P3 zirkuliert, wobei der zweite Druck P2 der Schmierflüssigkeit unbedingt kleiner als der dritte Druck P3 der dritten Flüssigkeit ist.

6. Schmiervorrichtung (1) nach einem der Ansprüche 1 bis 5,
**dadurch gekennzeichnet, dass** der zweite Wärmetauscher (23) im Inneren des mechanischen Systems (3) angeordnet sein kann.

7. Schmiervorrichtung (1) nach einem der Ansprüche 1 bis 6,
**dadurch gekennzeichnet, dass** der zweite Wärmetauscher (23) über dem Tank (2) angeordnet sein kann.

8. Schmiervorrichtung (1) nach einem der Ansprüche 1 bis 5,
**dadurch gekennzeichnet, dass** der zweite Wärmetauscher (23) an einer Wandung des Tanks (2) angeordnet sein kann.

9. Schmiervorrichtung (1) nach einem der Ansprüche 1 bis 8,
**dadurch gekennzeichnet, dass** der dritte Kreislauf (30) ein drittes Ventil (38) und dritte Sprinkler (34) aufweist.

10. Schmiervorrichtung (1) nach einem der Ansprüche 1 bis 9,
**dadurch gekennzeichnet, dass** das mechanische System (3) ein Hauptleistungsgetriebe (31) eines Drehflügelflugzeugs (30) ist.

11. Hauptleistungsgetriebe für ein Drehflügelflugzeug,
**dadurch gekennzeichnet, dass** das Hauptleistungsgetriebe mit einer Schmiervorrichtung (1) nach Anspruch 10 versehen ist, wobei der Tank (2) aus einem Gehäuse des Hauptleistungsgetriebes besteht.

## Claims

1. Triple circuit lubrication device (1) for lubricating a mechanical system (3), said lubrication device (1) being provided with a tank (2) and two lubrication circuits (10,20), said tank (2) containing a lubrication liquid, a first lubrication circuit (10) comprising a first pump (11), first pipes, a first pressure sensor (12), a first heat exchanger (13), first spray nozzles (14) and a first suction point (16) for sucking up said lubrication liquid, a second lubrication circuit (20) comprising a second pump (21), second pipes, a second pressure sensor (22), a second heat exchanger (23), second spray nozzles (24) and a second suction point (26) for sucking up said lubrication liquid, said first and second suction points (16,26) being situated in said tank (2), each pump (11,21) distributing via said first and second suction points (16,26) said lubrication liquid respectively into said first and second pipes, and then into said first and second spray nozzles (14,24) in order to lubricate said mechanical system (3),
**characterised in that**, said triple circuit lubrication device (1) comprises a tertiary circuit (30) in which a tertiary liquid flows, said tertiary circuit (30) comprising a third pump (31), third pipes, a third pressure sensor (32), said second heat exchanger (23) and a third heat exchanger (33), said third pump (31) permitting the flow of said tertiary liquid through said second heat exchanger (23) and said third heat exchanger (33), said second suction point (26) being situated below said first suction point (16).

2. Lubrication device (1) according to claim 1,
**characterised in that** said tertiary circuit (30) is a closed circuit.

3. Lubrication device (1) according to claim 1,
**characterised in that** said tertiary circuit (30) comprises a tertiary tank (37) and a third suction point (36), said third suction point (36) being situated in said tertiary tank (37), said third pump (31) distributing via said third suction point (36) said tertiary liquid into said third pipes and said second and third heat exchangers (23,33).

4. Lubrication device (1) according to any one of claims 1 to 2,
**characterised in that**, said lubrication liquid flowing in said second lubrication circuit (20) at a second pressure P2, said tertiary liquid flowing in said tertiary circuit (30) at a third pressure P3, the second pressure P2 of said lubrication liquid is strictly greater than said third pressure P3 of said tertiary liquid.

5. Lubrication device (1) according to any one of claims 1 to 3,
**characterised in that**, said lubrication liquid flowing in said second lubrication circuit (20) at a second pressure P2, said tertiary liquid flowing in said tertiary circuit (30) at a third pressure P3, the second pressure P2 of said lubrication liquid is strictly less than said third pressure P3 of said tertiary liquid.

6. Lubrication device (1) according to any one of claims 1 to 5,
**characterised in that** said second heat exchanger (23) is suitable for being situated inside said mechanical system (3).

7. Lubrication device (1) according to any one of claims 1 to 6,
**characterised in that** said second heat exchanger (23) is suitable for being situated above said tank (2).

8. Lubrication device (1) according to any one of claims 1 to 5,
**characterised in that** said second heat exchanger (23) is suitable for being situated against a wall of said tank (2).

9. Lubrication device (1) according to any one of claims 1 to 8,
**characterised in that** said tertiary circuit (30) comprises a tertiary valve (38) and third spray nozzles (34).

10. Lubrication device (1) according to any one of claims 1 to 9,
**characterised in that** said mechanical system (3) is a main power transmission gearbox (31) of a rotary wing aircraft (30).

11. Main power transmission gearbox intended for a rotary wing aircraft,
**characterised in that** said main power transmission gearbox is provided with a lubrication device (1) according to claim 10, said tank (2) being constituted by a casing of said main power transmission gearbox.
